# EUROPEAN PATENT SPECIFICATION

(11) **EP 1 682 388 B1**
(45) Date of publication and mention of the grant of the patent: **25.04.2007**
(21) Application number: 04818427.9
(22) Date of filing: 12.11.2004
(51) Int. Cl.: B60R 21/01, B60N 2/00, G01G 19/414

(54) **SEAT OCCUPANCY DETECTOR**
SITZBELEGUNGSDETEKTOR
DETECTEUR D'OCCUPATION DE SIEGE

(30) Priority: 14.11.2003 EP 03104207
(43) Date of publication of application: 26.07.2006
(73) Proprietor: IEE INTERNATIONAL ELECTRONICS & ENGINEERING S.A., 6468 Echternach (LU)
(72) Inventor: DECOSTER, Yves, B-6760 ETHE (BE)
(74) Representative: Beissel, Jean
(86) International application number: PCT/EP2004/052950
(87) International publication number: WO 2005/047067

(56) References cited:
- EP-A- 0 900 705
- DE-A- 10 144 877
- US-A- 5 957 491
- PATENT ABSTRACTS OF JAPAN vol. 006, no. 096 (P-120), 4 June 1982 (1982-06-04) -& JP 57 029916 A (YOKOGAWA HOKUSHIN ELECTRIC CORP), 18 February 1982 (1982-02-18)

## Description

### Introduction

The present invention generally relates to a seat occupancy detector e.g. for use in an automotive vehicle.

In modern vehicles, seat occupancy sensors are widely used in order to detect whether a passenger seat is occupied or not. The information about the occupancy of the passenger seat may then be used in order to control the deployment of one or more airbags associated to the passenger seat (the deployment is e.g. inhibited if the passenger seat is found to be non occupied) or in the triggering of a seat belt reminder.

The occupancy sensors usually comprise pressure sensing devices integrated in the respective passenger seat for detecting a pressure induced by the presence of a passenger into the seat. The pressure sensing devices, as e.g. disclosed in DE-A-42 37 072, comprise a plurality of individual force sensors, which are connected in a suitable manner to a control unit designed for measuring a pressure depending electrical property of said individual pressure sensors.

These occupancy sensors have proven to be very reliable and well adapted to the detection of seat occupancy. However one drawback of these occupancy sensors lies in the fact, that the pressure sensing device has to be physically connected to the control unit by means of connection wires in order to be functional. This need for physically connecting the sensing device to the control unit causes problems in modern cars equipped with a flexible seating system with removable and/or displaceable back seats.

Document DE-A-101 44 877 discloses an occupancy sensor, which does not need to be physically connected to the control unit. The occupancy sensor comprises a surface acoustic wave device (SAW device), which is integrated into a seating surface. The SAW device is used for pressure measurement and for remotely transmitting pressure related data to the control unit.

### Object of the invention

The object of the present invention is to provide a different seat occupancy sensor which is not depending on a physical connection between the pressure sensing device and the control unit.

### General description of the invention

In order to overcome the abovementioned problems, the present invention proposes a seat occupancy sensor, comprising at least one pressure detection device associated with a surface of a seat and a control unit for communicating with the pressure detection device. According to the invention said pressure detection device comprises a surface acoustic wave device including at least one surface acoustic wave resonator and an antenna and said control unit comprises an RF antenna for remotely communicating with said surface acoustic wave device. Furthermore said pressure detection device comprises a dedicated pressure sensor, said dedicated pressure sensor being electrically connected to said surface acoustic wave device so as to activate said surface acoustic wave device when said dedicated pressure sensor is triggered.

A surface acoustic wave resonator consists of a piezoelectric substrate with metallic structures (interdigital transducers) on its plain-polished surface. Due to piezoelectricity an electric signal at the interdigital transducers will stimulate a surface acoustic wave on the surface of the substrate. Vice versa a surface acoustic wave generates an electric charge distribution at the receiving interdigital transducers which is measurable as an electric signal. In case of a one port surface acoustic wave resonator only one interdigital transducer is connected electrically while the other interdigital transducers are reflective. If the interdigital transducer is connected to an antenna, the element is operable as a passive wirelessly interrogable system.

As the velocity of the surface acoustic wave travelling along the surface of the piezoelectric substrate is depending inter alia on the environmental conditions at the sensor surface, the response of the surface acoustic wave devices depends on the environmental conditions. Thus the surface acoustic wave devices may be used to measure environmental conditions such as pressure, temperature, etc.

The surface acoustic wave resonator is connected to a miniaturized antenna so that the surface acoustic wave device acts as a resonator. If a radio frequency (RF) signal is sent to the surface acoustic wave device, the surface acoustic wave resonator oscillates at a frequency, which is depending on the given environmental condition in the vicinity of the surface acoustic wave device. The response signal of the surface acoustic wave device, which is wirelessly transmitted back to the control unit, may be processed in the control unit in order to extract the information about the measured condition.

The remote operability of the surface acoustic wave device enables the seat occupancy sensor to be remotely operated and interrogated without the need for cabling between the pressure detection device and the control unit. Thus the seat occupancy status may be detected for all seats in a car without affecting the flexibility of a seating system with removable and/or displaceable back seats.

It will be noted, that a single control unit may be used for operating and interrogating several pressure detection devices arranged in different seats of the car. In a possible embodiment, the RF antenna of the control unit may be arranged in a region of the car, where communication is possible with surface acoustic wave devices as well in the front seats as in the rear seats. It will be appreciated, that in this case each of the surface acoustic wave devices associated to the different seats preferably operates in a different oscillating frequency range in order to be selectively addressable. Alternatively or additionally a radio frequency tag may be integrated in each of the surface acoustic wave devices in order to ensure the addressability of each device.

It will be noted that surface acoustic wave devices are totally passive sensor devices which do not require a dedicated power supply. Thus there is no need to provide a battery power for the surface acoustic wave device of the seat occupancy sensor of the present invention to be operable. Furthermore, surface acoustic wave devices are characterized by their small size, low cost and rigged construction.

According to the invention, the pressure detection device comprises besides the surface acoustic wave device, a dedicated pressure sensor, which is associated to the surface acoustic wave device. In this embodiment, the dedicated pressure sensor, which may be of any suitable type for use in a vehicle seat, is solely responsible for the pressure detection, while the surface acoustic wave device is used for the remote transmission of the respective pressure signal. In a preferred embodiment, said dedicated pressure sensor comprises a pressure sensitive switching device, said pressure sensing switching device being electrically connected to said surface acoustic wave device so as to activate said surface acoustic wave device when said pressure sensitive switching device is triggered. In this embodiment of the invention, the detection of seat occupancy is achieved by the pressure sensitive switching device and the corresponding information is transmitted to the control unit using the surface acoustic wave device's capability to remotely communicate with the control unit.

In a possible embodiment of this variant, the pressure sensitive switching device may have an electrical property (e.g. resistance) which varies depending on the pressure acting on the pressure sensitive switching device. Such a pressure transducer device may then be connected to the surface acoustic wave resonator in such a way, that the resonance frequency of the device is modulated by electrical property value of the pressure sensitive device.

In a preferred embodiment of the invention, the pressure sensitive switching device is connected in series between the surface acoustic wave resonator and the antenna. It follows that the pressure sensitive switching device acts as a switch for establishing an electrical connection between the surface acoustic wave resonator and the antenna. The surface acoustic wave device accordingly is only activated if the connection between the surface acoustic wave resonator and the antenna is established. The pressure sensitive switching device thus should be designed so as to close the electrical contact between the surface acoustic wave resonator and the antenna if a passenger is occupying the seat.

The pressure sensitive switching device may e.g. comprise a foil-type switching device, which is integrated into the seat. These foil-type switching devices are well known in the art and are available as simple switches or as pressure transducers.

In the absence of a seat occupant, the pressure sensitive switching device is not triggered and the surface acoustic wave device is accordingly not active. Thus the control unit does not receive a signal from the surface acoustic wave device. On the contrary, if an occupant is present, the switching device is triggered and the electrical contact between the surface acoustic wave resonator and the antenna is established. The control unit thus will receive a response signal from the surface acoustic wave device. In this embodiment of the invention, the presence or the absence of a response signal of the surface acoustic wave device gives the occupant detection information to the control unit.

In order to increase the active area of the seat occupancy sensor, the pressure sensitive switching device preferably comprises a plurality of individual pressure sensors or switches arranged at different locations with respect to the seat surface. The different individual pressure sensors may for instance be distributed over the seating surfaces of the seat so as to ensure detection of a passenger even in case of an out of position occupancy. The skilled person will appreciate that there exist different possibilities to connect the different individual pressure sensors between the surface acoustic wave resonator and the antenna.

The surface acoustic wave device of the present variant of the invention may be solely used in order to transmit the occupancy information to the control unit. However in a preferred embodiment, the surface acoustic wave device is preferably adapted for the measurement of the temperature inside the seat, thus allowing for temperature compensation of the occupancy information. In this embodiment, the surface acoustic wave device accordingly comprises at least one acoustic wave resonator adapted for temperature measurement. Said surface acoustic wave resonator is e.g. able to oscillate at a given frequency depending on the temperature inside the sealed chamber.

It will be appreciated that the present invention proposes a very flexible, robust and low cost seat occupancy sensor, which is suitable for wirelessly detecting seat occupancy for all of the seats of a vehicle. Furthermore it will be noted that the seat occupancy sensor of the present invention may be used for different applications such as airbag deactivation (if a passenger seat is not occupied), seat belt reminders or others.

### Detailed description with respect to the figures

The present invention will be more apparent from the following description of several not limiting embodiments with reference to the attached drawings, wherein
- Fig.1:: a top view of a vehicle seat seating surface with an embodiment of a seat occupancy sensor;
- Fig.2:: a section view of the seat occupancy sensor along the line A-A of fig. 1;
- Fig.3:: a schematic view of the operation of the occupancy sensor of fig. 1.

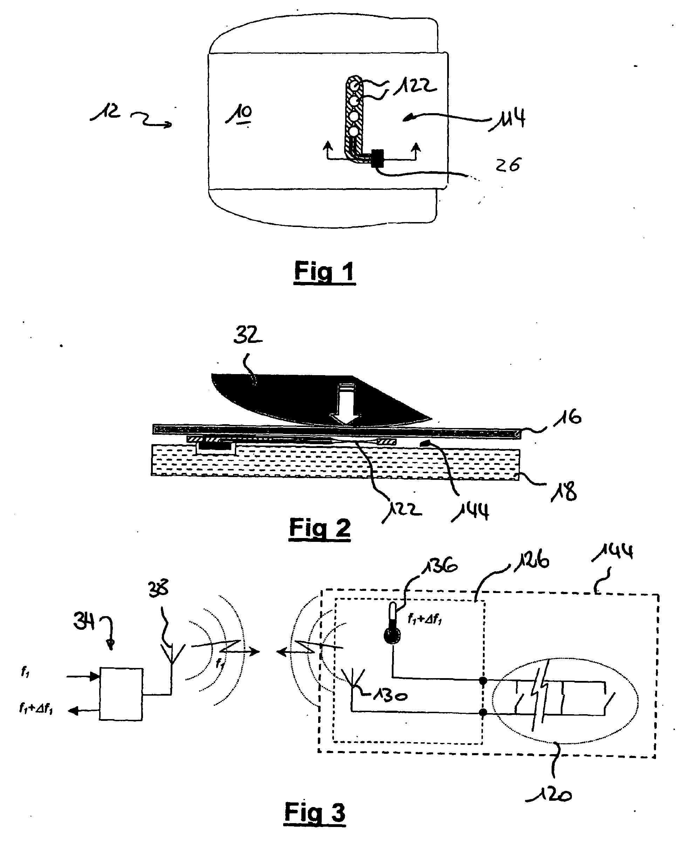

Fig 1 shows a top view on a seating surface 10 of a vehicle seat 12. A pressure detection device 114 is associated with the seating surface 10. In the shown example, the pressure detection device 114 is integrated in the car seat between the trim 16 and the seat foam 18.

The surface acoustic wave device comprises a surface acoustic wave resonator 136. The main interdigital transducer of resonator 136 is coupled to antenna 130 of the surface acoustic wave device 26. If a radio frequency signal at a frequency ***f₁*** is emitted by the remote control unit 34, the signal is received by the surface acoustic wave resonator 136 via antenna 130. The surface acoustic wave resonator 136 oscillates with a frequency ***f₁*+*Δf₁*,** where ***Δf₁*** is e.g. proportional to the local temperature. This resonance frequency is sent back to and received by the control unit for data processing.

The pressure detection device 114 comprises a pressure sensitive switching device 120, which is associated with the seating surface 10 of the seat 12. The pressure sensitive switching device 120 may e.g. be integrated into the seat between the seat trim 16 and the seat foam 18. Alternatively the pressure sensitive switching device 120 may be integrated into the seat foam 18.

The pressure sensitive switching device 120 may comprise a simple membrane switching device or a pressure transducer. Preferably the pressure sensitive switching device 120 comprises several pressure sensitive switches or sensors 122, which are suitably distributed over the seating surface in order to increase the active area of the pressure sensitive switching device 120.

The pressure sensitive switching device 120 is connected to a surface acoustic wave device 126 in such a way as to activate said surface acoustic wave device 126 when one or more of said switches or sensors 122 of said pressure sensitive switching device 120 is triggered by an occupant 32.

Further to a surface acoustic wave resonator 136, the surface acoustic wave device 126 comprises a miniaturized antenna 130, which is connected to an interdigital transducer (not shown) of the surface acoustic wave resonator 136. This antenna enables the surface acoustic wave device to remotely and wirelessly communicate with a control unit 34 (not shown in figures 1 and 2) including an RF antenna 38. The RF antenna 38 of the control unit 34 is preferably arranged inside the vehicle at a location, at which the RF antenna "sees" the antennas 130 of different surface acoustic wave devices arranged in different vehicle seats.

In the shown embodiment, the pressure sensitive switching device 120 is connected in series between the surface acoustic wave resonator 136 and the antenna 130 of the surface acoustic wave device 126. It follows that the pressure sensitive switching device 120 acts as a switch for establishing an electrical connection between the surface acoustic wave resonator 136 and the antenna 130. Accordingly the surface acoustic wave device 126 is only activated if the pressure sensitive switching device 120 is triggered by the presence of an occupant on the seat.

In the absence of a seat occupant, the pressure sensitive switching device 120 is not triggered and the surface acoustic wave device 126 is not active. Thus in the absence of a seat occupant, the pressure sensitive switching device 120 is not triggered and the surface acoustic wave device 126 is not active. Thus the control unit 34 does not receive a signal from the surface acoustic wave device. On the contrary, if an occupant 32 is present, the switching device 120 is triggered and the electrical contact between the surface acoustic wave resonator 136 and the antenna 130 is established. The control unit 34 thus will receive a response signal from the surface acoustic wave device 126. The presence or the absence of a response signal of the surface acoustic wave device thus gives the occupant detection information to the control unit.

Surface acoustic wave resonator 136 may be solely used for its wireless communication capabilities. In this case, if the pressure sensitive switching device 120 is triggered and if a radio frequency signal with a frequency ***f₁*** is emitted by the remote control unit 34, the signal is received by the surface acoustic wave resonator 136 via antenna 130. The resonator then oscillates with a given frequency ***f₁*** which is sent back to the control unit 34 if one or several switches 122 are activated.

In the preferred embodiment shown in fig. 3, the surface acoustic wave resonator 136 is designed for temperature measurement. In response to an excitation field with frequency ***f₁*** the resonator 136 then oscillates with a frequency ***f₁*+*Δf₁*** where ***Δf₁*** is e.g. proportional to the local temperature. This frequency ***f₁*+*Δf₁*** is sent back to and received by the control unit for data processing. After extraction of the temperature information, the sensed temperature may then be used for temperature calibration of the pressure sensitive switching device 120.

### Listing of reference numerals

- 10: seating surface
- 12: vehicle seat
- 16: seat trim
- 18: seat foam
- 20: sealed chamber
- 22: cavities
- 24: channels
- 26: surface acoustic wave device
- 30: miniaturized antenna
- 32: occupant
- 34: control unit
- 36: RF antenna
- 38: RF antenna
- 114: pressure detection device
- 120: pressure sensitive switching device
- 122: pressure sensitive switches or sensors
- 126: surface acoustic wave device
- 130: antenna
- 136: surface acoustic wave resonator

## Claims

1. Seat occupancy sensor, comprising at least one pressure detection device (114) associated with a surface (10) of a seat and a control unit (34) for communicating with the pressure detection device (114), wherein said pressure detection device (114) comprises a surface acoustic wave device (26) including at least one surface acoustic wave resonator (136) and an antenna (130) and wherein said control unit (34) comprises an RF antenna (38) for remotely communicating with said surface acoustic wave device (26), **characterised in that** said pressure detection device (114) further comprises a dedicated pressure sensor (122), said dedicated pressure sensor (122) being electrically connected to said surface acoustic wave device (26) so as to activate said surface acoustic wave device (26) when said dedicated pres-sure sensor (122) is triggered.

2. Seat occupancy sensor according to claim 1, wherein said dedicated pressure sensor (122) comprises a pressure sensitive switching device, said pressure sensing switching device being electrically connected to said surface acoustic wave device (26) so as to activate said surface acoustic wave device when said pressure sensitive switching device is triggered.

3. Seat occupancy sensor according to claim 2, wherein said pressure sensitive switching device is connected in series between the surface acoustic wave resonator (136) and the antenna (130).

4. Seat occupancy sensor according to any one of claims 2 and 3, wherein said pressure sensitive switching device comprises a plurality of individual pressure sensors or switches (122) arranged at different locations with respect to the seat surface (10).

5. Seat occupancy sensor according to any one of claims 1 to 4, wherein said surface acoustic wave device (26) comprises at least one acoustic wave resonator adapted for temperature measurement.

6. Seat occupancy sensor according to claim 5, wherein said surface acoustic wave resonator (136) is able to oscillate at a given frequency depending on the temperature inside the sealed chamber.

## Patentansprüche

1. Sitzbelegungssensor, der mindestens eine Druckerkennungsvorrichtung (114) umfasst, die einer Fläche (10) eines Sitzes zugeordnet ist und einer Steuerungseinheit (34) für die Kommunikation mit der Druckerkennungsvorrichtung (114), wobei die Druckerkennungsvorrichtung (114) eine akustische Oberflächenwellenvorrichtung (26) umfasst, die mindestens einen akustischen Oberflächenwellenresonator (136) und eine Antenne (130) umfasst und wobei die Steuerungseinheit (34) eine RF-Antenne (38) für die Fernkommunikation mit der akustischen Oberflächenwellenvorrichtung (26) umfasst, **dadurch gekennzeichnet, dass** die Druckerkennungsvorrichtung (114) außerdem einen dedizierten Drucksensor (122) umfasst, wobei der dedizierte Drucksensor (122) elektrisch so mit der akustischen Oberflächenwellenvorrichtung (26) verbunden ist, dass die akustische Oberflächenwellenvorrichtung (26) aktiviert wird, wenn der dedizierte Drucksensor (122) getriggert wird.

2. Sitzbelegungssensor nach Anspruch 1, bei dem der dedizierte Drucksensor (122) eine druckempfindliche Schaltvorrichtung umfasst, wobei die Druckfühlschaltvorrichtung mit der akustischen Oberflächenwellenvorrichtung (26) elektrisch so verbunden ist, dass die akustische Oberflächenwellenvorrichtung aktiviert wird, wenn die druckempfindliche Schaltvorrichtung getriggert wird.

3. Sitzbelegungssensor nach Anspruch 2, bei dem die druckempfindliche Schaltvorrichtung zwischen dem akustischen Oberflächenwellenresonator (136) und der Antenne (130) in Reihe geschaltet ist.

4. Sitzbelegungssensor nach einem der Ansprüche 2 und 3, bei dem die druckempfindliche Schaltvorrichtung eine Vielzahl von einzelnen Drucksensoren oder Druckschaltern (122) umfasst, die in Bezug auf die Sitzfläche (10) an verschiedenen Orten angeordnet sind.

5. Sitzbelegungssensor nach einem der Ansprüche 1 bis 4, bei dem die akustische Oberflächenwellenvorrichtung (26) mindestens einen akustischen Wellenresonator (136) umfasst, der für die Temperaturmessung ausgelegt ist.

6. Sitzbelegungssensor nach Anspruch 5, bei dem der akustische Oberflächenwellenresonator (136) mit einer gegebenen Frequenz in Abhängigkeit von der Temperatur in der abgedichteten Kammer schwingen kann.

## Revendications

1. Capteur d'état d'occupation d'un siège, comprenant au moins un dispositif de détection de pression (114) associé à une surface (10) d'un siège et une unité de commande (34) pour communiquer avec le dispositif de détection de pression (114), dans lequel ledit dispositif de détection de pression (114) comprend un dispositif à ondes acoustiques de surface (26) comprenant au moins un résonateur d'ondes acoustiques de surface (136) et une antenne (130) et dans lequel ladite unité de commande (34) comprend une antenne RF (38) pour communiquer à distance avec ledit dispositif à ondes acoustiques de surface (26), **caractérisé en ce que** ledit dispositif de détection de pression (114) comprend en outre un capteur de pression dédié (122), ledit capteur de pression dédié (122) étant relié électriquement audit dispositif à ondes acoustiques de surface (26) de façon à activer ledit dispositif à ondes acoustiques de surface (26) lorsque ledit capteur de pression dédié (122) est déclenché.

2. Capteur d'état d'occupation d'un siège selon la revendication 1, dans lequel ledit capteur de pression dédié (122) comprend un dispositif de commutation sensible à la pression, ledit dispositif de commutation sensible à la pression étant relié électriquement audit dispositif à ondes acoustiques de surface (26) de façon à activer ledit dispositif à ondes acoustiques de surface lorsque ledit dispositif de commutation sensible à la pression est déclenché.

3. Capteur d'état d'occupation d'un siège selon la revendication 2, dans lequel ledit dispositif de commutation sensible à la pression est relié en série entre le résonateur d'ondes acoustiques de surface (136) et l'antenne (130).

4. Capteur d'état d'occupation d'un siège selon l'une quelconque des revendications 2 et 3, dans lequel ledit dispositif de commutation sensible à la pression comprend une pluralité de capteurs ou commutateurs de pression individuels (122) disposés à différents emplacements par rapport à la surface de siège (10).

5. Capteur d'état d'occupation d'un siège selon l'une quelconque des revendications 1 à 4, dans lequel ledit dispositif à ondes acoustiques de surface (26) comprend au moins un résonateur d'ondes acoustiques conçu pour une mesure de température.

6. Capteur d'état d'occupation d'un siège selon la revendication 5, dans lequel ledit résonateur d'ondes acoustiques de surface (136) est capable d'osciller à une fréquence donnée en fonction de la température à l'intérieur de la chambre étanche.
